# EUROPÄISCHE PATENTSCHRIFT

(11) **EP 2 985 128 B1**
(45) Veröffentlichungstag und Bekanntmachung des Hinweises auf die Patenterteilung: **31.01.2018**
(21) Anmeldenummer: 15176931.2
(22) Anmeldetag: 15.07.2015
(51) Int. Cl.: B29C 31/08, B29C 49/42, B29L 31/00, B29K 105/00, B23B 31/40, B29C 35/08, B29C 49/64

(54) **HALTEEINRICHTUNG FÜR KUNSTSTOFFVORFORMLINGE**
HOLDING DEVICE FOR PLASTIC PREFORMS
DISPOSITIF DE MAINTIEN POUR ÉBAUCHES EN MATIÈRE PLASTIQUE

(30) Priorität: 15.07.2014 DE 202014103260 U
(43) Veröffentlichungstag der Anmeldung: 17.02.2016
(73) Patentinhaber: Krones AG, 93073 Neutraubling (DE)
(72) Erfinder: Zimmerer, Johann, 93073 Neutraubling (DE)
(74) Vertreter: Bittner, Bernhard

(56) Entgegenhaltungen:
- WO-A1-2004/046676
- JP-A- 2005 161 576
- US-A- 4 572 355
- US-A1- 2003 034 231
- US-A1- 2004 047 940
- US-A1- 2005 092 892
- US-B1- 6 471 038

## Beschreibung

Die vorliegende Erfindung bezieht sich auf eine Halteeinrichtung für Kunststoffbehältnisse und insbesondere für Kunststoffvorformlinge. Im Bereich der getränkeherstellenden Industrie ist es bekannt, dass zunächst Kunststoffvorformlinge zur Verfügung gestellt und erwärmt werden und anschließend diese erwärmten Kunststoffvorformlinge mittels Umformungseinrichtungen, wie insbesondere Streckblasmaschinen, zu Kunststoffbehältnissen umgeformt werden. Für den Erwärmungsvorgang sind unterschiedliche Vorgehensweisen bekannt.

So ist es beispielsweise bekannt, dass die Kunststoffvorformlinge an Infrarot-Heizelementen vorbeigeführt und so erwärmt werden. In jüngerer Zeit sind jedoch auch Mikrowellenerwärmungseinrichtungen bekannt geworden, innerhalb derer die Kunststoffvorformlinge mit Mikrowellen erwärmt werden. Üblicherweise werden die Kunststoffvorformlinge dabei vereinzelt transportiert und mittels Halteeinrichtungen gehalten. Aus dem Stand der Technik sind diverse Halteeinrichtungen bekannt, wie beispielsweise Greifklammern, welche die Kunststoffvorformlinge an ihren Mündungen greifen. Daneben sind aus dem Stand der Technik jedoch auch Halteelemente, wie Haltedorne, bekannt, welche in die Mündungen der Kunststoffvorformlinge eingreifen und diese so halten.

Halteelemente für Kunststoffvorformlinge sind unter anderem aus den Druckschriften US2005/092892A1, US2004/047940A1, WO2004/046676 und JP2005/161576A bekannt.

Derartige Halteelemente weisen jedoch teilweise den Nachteil auf, dass die Kunststoffvorformlinge nicht stabil und dauerhaft gehalten werden. Weiterhin wäre es wünschenswert, ein Halteelement zur Verfügung zu stellen, welches auch auf unterschiedliche Durchmesser der Mündungen der Kunststoffbehältnisse anpassbar ist.

Der vorliegenden Erfindung liegt daher die Aufgabe zugrunde, den Einsatzbereich derartiger Halteeinrichtungen zu erhöhen. Dies wird erfindungsgemäß durch eine Halteeinrichtung nach dem unabhängigen Anspruch erreicht. Vorteilhafte Ausführungsformen und Weiterbildungen sind Gegenstand der Unteransprüche.

Eine erfindungsgemäße Halteeinrichtung zum Halten von Kunststoffbehältnissen und insbesondere von Kunststoffvorformlingen weist einen Halteabschnitt auf, der in eine Mündung der zu haltenden Kunststoffbehältnisse einführbar ist. Dabei weist der Halteabschnitt wenigstens ein erstes Halteelement und wenigstens ein zweites Halteelement auf, welche bezüglich einander beweglich sind und welche wenigstens einen Abschnitt aufweisen, der an eine Innenwandung der Mündung anlegbar ist.

Erfindungsgemäß ist zwischen den Halteelementen ein Spreizkörper angeordnet, der die beiden Halteelemente wenigstens zeitweise abstützt und bevorzugt auseinanderspreizt, wobei an diesem Spreizkörper ein wechselbares Spreizelement vorgesehen ist, wobei sich dieses Spreizelement wenigstens abschnittsweise zwischen dem Spreizkörper und den Halteelementen befindet. Es wäre dabei möglich, dass der Spreizkörper die Halteelemente nur in einem in die Behältnisse haltenden Zustand abstützt, wobei bevorzugt in diesem Zustand der Spreizkörper über das Spreizelement bestimmt, wie nahe die Halteelemente zusammengedrückt werden können.

Insbesondere befindet sich das Spreizelement in einer bezüglich der Längsrichtung radialen Richtung der Halteeinrichtung zwischen dem Spreizkörper insbesondere einer Außenwandung des Spreizkörpers und den Halteelementen, insbesondere einer Innenwandung der Halteelemente. So kann sich das Spreizelement in einer Umfangsrichtung um den Spreizkörper herum erstrecken und dabei kann der Querschnitt dieses Spreizelements, wie erwähnt, zwischen dem Spreizkörper und den Halteelementen angeordnet sein.

Es wird daher im Rahmen der Erfindung vorgeschlagen, dass nicht nur die im Stand der Technik bekannten Halteelemente, welche sich selbsttätig auseinanderspreizen, eingesetzt werden, sondern zusätzlich noch der erwähnte Spreizkörper, der insbesondere dazu dient, die Halteelemente auseinander zu drängen. Das Spreizelement selbst ist dabei an dem Spreizkörper auswechselbar angebracht, so dass durch eine Auswechslung dieses Spreizelementes eine Anpassung an unterschiedliche Mündungsgeometrien unterschiedlicher Kunststoffvorformlinge vorgenommen werden kann, um demnach auch die Halte- bzw. Spannkraft zu verändern. Eine Anpassung an unterschiedliche Mündungsgeometrien bzw. das Einstellen der Halte- bzw. Spannkraft kann jedoch auch direkt über einen Wechsel des Spreizkörpers an sich vorgenommen werden.

Bei einer weiteren vorteilhaften Ausführungsform ist zwischen wenigstens zwei Halteelementen ein Schlitz ausgebildet. Durch das Vorsehen dieses Schlitzes sind diese Halteelemente wenigstens teilweise bzw. in einem bestimmten Umfang bezüglich einander beweglich. Vorteilhaft erstreckt sich dabei dieser Schlitz parallel zu der Längsrichtung der gesamten Halteeinrichtung. Vorteilhaft erstreckt sich diese Längsrichtung der Halteeinrichtung auch parallel zu einer Längsrichtung des von dieser Halteeinrichtung gehaltenen Kunststoffbehältnisses.

Bei einer weiteren vorteilhaften Ausführungsform weist der Halteabschnitt wenigstens drei, bevorzugt wenigstens vier und besonders bevorzugt wenigstens fünf derartige Halteelemente bzw. Halteabschnitte auf. Zwischen diesen Halteelementen sind dabei bevorzugt jeweils die oben erwähnten Schlitze ausgebildet. Auf diese Weise wird eine sehr hohe Anpassungsfähigkeit des Halteabschnittes und damit der gesamten Halteeinrichtung erreicht.

Bei einer weiteren vorteilhaften Ausführungsform ragen die Halteelemente nicht vollständig in das Behältnis hinein sondern bei einem an der Halteeinrichtung angeordneten Behältnis befindet sich auch wenigstens ein Abschnitt des Halteelements noch außerhalb des Behältnisses. Bevorzugt sind diese Halteelemente an einem Basiskörper und bevorzugt an einem gemeinsamen Basiskörper angeordnet. Dieser Basiskörper ragt dabei ebenfalls nicht in das Behältnis hinein. Bevorzugt sind die Halteelemente einteilig mit diesem Basiskörper ausgebildet. Bevorzugt weisen die Halteelemente eine stegförmige Gestalt auf. Der Basiskörper weist wiederum bevorzugt einen Hohlraum auf und/oder eine im Wesentlichen zylindrische Gestalt auf. In diesem Hohlraum kann sich in einem montierten Zustand ein Abschnitt des Spreizkörpers befinden.

Vorzugsweise enden die oben erwähnten Schlitze zwischen den Halteelementen an dem Basiskörper. Dabei ist es möglich, dass die Schlitze nicht unmittelbar an dem Basiskörper enden sondern dass sich an die Schlitze Öffnungen anschließen, wie etwa kreisrunde oder ovale Öffnungen, in welche diese Schlitze übergehen. Auch diese Weise können Materialbelastungen durch auf die Halteelemente wirkende Kräfte verringert werden.

Bei einer weiteren vorteilhaften Ausführungsform weisen die Haltelemente betrachtet in einer senkrecht zu der Längsrichtung der Halteeinrichtung stehenden Ebene eine gekrümmte Oberfläche auf. Dabei kann diese Krümmung an eine Krümmung der Innenwandung der Kunststoffbehältnisse bzw. deren Mündungsabschnitt angepasst sein.

Vorteilhaft ist der Spreizkörper in einer Längsrichtung der Halteeinrichtung gegenüber dem Halteabschnitt bewegbar. Dabei kann durch diese Bewegbarkeit beispielsweise das Auswechseln des Spreizkörpers und des Spreizelementes erreicht werden. So kann beispielsweise der Spreizkörper in der Längsrichtung der Halteeinrichtung aus einem Bereich zwischen den Halteelementen herausgeschoben werden und auf diese Weise der Bereich des Spreizkörpers, an dem das Spreizelement angeordnet ist, zugänglich werden, so dass das Spreizelement eingetauscht werden kann.

Vorteilhaft weist die Halteeinrichtung wenigstens ein Arretierelement auf, welches den Spreizkörper in einer vorgegebenen Position (hinsichtlich der Längsrichtung der Halteeinrichtung) gegenüber den Halteelementen arretiert. Vorteilhaft wird der Spreizkörper durch die Halteelemente auch in der Längsrichtung der Halteeinrichtung fixiert.

Bei einer weiteren vorteilhaften Ausführungsform ist das Spreizelement als ringförmiger Körper ausgebildet. Vorteilhaft ist das Spreizelement als elastischer Körper ausgebildet. So kann es sich besonders bevorzugt bei dem Spreizelement um einen O-Ring handeln. Dieser O-Ring kann dabei durch einen anderen O-Ring mit einem anderen Querschnitt oder Geometrie eingewechselt werden, um so dessen Aufspreizwirkung bzw. die Spannkraft bzw. Haltekraft des gesamten Halteelements zu verändern. Vorteilhaft handelt es sich bei dem Spreizelement um ein flexibles Spreizelement.

Bei einer weiteren vorteilhaften Ausführungsform ist wenigstens ein Halteelement oder der Spreizkörper aus einem nicht-metallischen Material gefertigt. Bevorzugt sind sowohl der Spreizkörper als auch die Halteelemente aus einem nicht- metallischen Material gefertigt.

Im Stand der Technik sind üblicherweise derartige Halteelemente aus Metall gefertigt. Wie erwähnt, ist es im Stand der Technik üblich, die Kunststoffvorformlinge mittels Infrarotstrahlung zu erwärmen. In jüngerer Zeit geht man jedoch auch dazu über, anstelle von Infrarot-Öfen Mikrowellenöfen zu verwenden. Die hier beschriebene vorteilhaft nicht-metallische Ausgestaltung wenigstens eines Halteelementes und bevorzugt beider Halteelemente und/oder des Spreizkörpers bietet den Vorteil, dass das Halteelement auch für den Einsatz in Mikrowellenöfen verwendet werden kann.

Bei einer Preform (Kunststoffvorformling)-Erwärmung mittels Mikrowellen würden sich die metallischen Werkstoffe, die den Mikrowellen ausgesetzt sind, sehr schnell erwärmen und daher wäre deren Funktion beeinträchtigt bzw. diese Funktion könnte nicht erfüllt werden. Bei der hier vorgeschlagenen Ausführungsform wird ein Halteelement zum Transport von Kunststoffbehältnissen bzw. Kunststoffvorformlingen zur Verfügung gestellt, welche mit Mikrowellen erwärmt werden. Das Haltelement ist daher so beschaffen, dass es aus Materialien besteht, die sehr wenig oder gar keine Mikrowellen absorbieren. Daneben kann - wie oben erwähnt - durch den Austausch des O-Rings oder des Spreizkörpers, welche ebenfalls bevorzugt aus einem nicht-metallischen Werkstoff bestehen, die Haltekraft bzw. die Spannkraft des Greifers auf die Kunststoffvorformlinge genau eingestellt werden.

Durch den Einsatz nicht-metallischer Werkstoffe wird die Funktion des Greifens erfüllt und zugleich der Mikrowellenprozess nicht beeinflusst. Vorzugsweise sind sowohl die Halteelemente als auch der Spreizkörper aus einem nicht-metallischen Material gefertigt.

Bei einer weiteren vorteilhaften Ausführungsform ist das Material der Halteelemente und/oder des Spreizkörpers aus einer Gruppe von Materialien ausgewählt, welche Kunststoffe, Keramik und Porzellan enthält. Vorteilhaft ist das Material der Halteelemente und/oder des Spreizkörpers aus einer Gruppe von Kunststoffen ausgewählt, welche PEI (Polyetherimid), PTFE (Polytetrafluorethylen), PP (Polypropylen) und dergleichen enthält. In jedem dieser Fälle ist das Material jedenfalls nicht metallisch und wird daher nicht übermäßig durch Mikrowellen erwärmt.

Durch die jeweiligen Spreizelemente ist bevorzugt die Halteeinrichtung in ihrer Haltekraft variabel. Zum Ändern der Haltekraft kann der Spreizkörper aus dem von den Halteelementen umschlossenen Bereich herausgedrückt werden, was bevorzugt durch eine oberhalb des Spreizkörpers liegende Bohrung erfolgt. Anschließend kann das Spreizelement von dem Spreizkörper entfernt und gegen ein anderes Spreizelement ausgetauscht werden. In einem weiteren Schritt kann der Spreizkörper mit dem nunmehr neuen Spreizelement wieder in den von den Halteelementen umgriffenen Raum hineingedrückt werden.

Dabei kann bevorzugt der Spreizkörper über Nut/Vorsprung - Verbindungen zentriert und auch gehalten werden. Genauer gesagt kann dabei ein unten genauer beschriebener Vorsprung des Spreizkörpers in eine Nut eines Halteelements eingreifen und so bewirkt werden, dass kein zusätzliches Verschrauben oder Fixieren des Spreizkörpers innerhalb der Halteelemente nötig ist. Bevorzugt weist der Spreizkörper eine stiftförmige Gestalt auf. Bevorzugt weist der Spreizkörper wenigstens abschnittsweise einen in der Längsrichtung der Halteeinrichtung konstanten Querschnitt auf.

Bevorzugt bilden die Halteelemente gemeinsam einen Hohlraum aus, der zur Aufnahme wenigstens eines Abschnittes des Spreizkörpers geeignet ist und auch dazu dient.

Bei einer weiteren vorteilhaften Ausführungsform weist der Spreizkörper eine Nut auf, in welche das Spreizelement einlegbar ist. Dabei ist diese Nut vorteilhaft ringförmig ausgebildet und erstreckt sich durchgehend in einem vorgegebenen Höhenabschnitt des Spreizkörpers. Bevorzugt ist die Nut derart beschaffen, dass sie nur einen Bereich des Spreizelements aufnimmt, so dass das Spreizelement in einer radialen Richtung der Spreizkörpers aus dieser Nut herausragt. Damit dient diese Nut primär der Positionsfixierung des Spreizelements, insbesondere in der Längsrichtung der Halteeinrichtung.

Bei einer weiteren vorteilhaften Ausführungsform weist wenigstens ein Halteelement eine Nut zur Aufnahme wenigstens eines Abschnittes des Spreizelementes auf. Vorzugsweise weisen mehrere der Halteelemente eine entsprechende Nut zur Aufnahme des Abschnittes des Spreizelementes auf. Dabei kann das Spreizelement in diese Nut eingelegt werden, so dass es selbstständig in dieser Nut hält. Weiterhin wäre es auch möglich, dass sich durch die einzelnen Nuten in den Halteelementen eine insgesamt mehr oder weniger umlaufende Nut ergibt.

Bei einer weiteren vorteilhaften Ausführungsform befindet sich die Nut an den Halteelementen an einer Innenseite der Halteelemente, d.h. an einer Innenseite, welche dem Spreizkörper zugewandt ist.

Bei einer weiteren vorteilhaften Ausführungsform weist der Spreizkörper ein Anschlagelement auf, welches in einem montierten Zustand an einem Endabschnitt wenigstens eines Halteelementes anliegt. Auf diese Weise kann die Position des Spreizkörpers gegenüber den Haltelementen fixiert bzw. genauer definiert werden.

Bei einer weiteren vorteilhaften Ausführungsform weist die Halteeinrichtung einen Grundkörper auf, an dem die Halteelemente zumindest mittelbar befestigt sind. Dabei können die Halteelemente wiederum selbst an einem Zentralteil insbesondere dem oben erwähnten Basiskörper angeordnet sein und bevorzugt einteilig mit diesem Basiskörper ausgebildet sein. Dieser Basiskörper wiederum kann an dem Grundkörper befestigt sein, beispielsweise an den Grundkörper angeschraubt sein. Dabei ist es möglich, dass dieser Basiskörper, an dem der Halteabschnitt bzw. die Halteelemente angeordnet sind, in eine Aufnahmeöffnung des Grundkörpers eingesteckt ist.

Bei einer weiteren vorteilhaften Ausführungsform weist der Grundkörper eine Öffnung auf, durch welche in der Längsrichtung der Halteeinrichtung ein Werkzeug in das Innere des Basiskörpers einführbar ist. Durch die Einführung dieses Werkzeuges, beispielsweise eines Schraubenziehers, ist es möglich, den Spreizkörper aus einer durch die Halteelemente gegebenen Klammerung herauszudrücken, indem ein entsprechender Druck in der Längsrichtung der Halteeinrichtung auf den Basiskörper aufgebracht wird. Dieses Herausdrücken kann erfolgen, um das Spreizelement auszuwechseln.

Vorteilhaft wird in einem Normalzustand der Spreizkörper auch durch eine federnde Kraft der einzelnen Halteelemente fixiert. Durch das Einführen eines Werkzeuges durch die Öffnung und das Herausdrücken des Spreizkörpers kann diese Federkraft der Halteelemente überwunden werden. Bei einer weiteren vorteilhaften Ausführungsform weist der Spreizkörper einen sich wenigstens teilweise in der Umfangsrichtung des Spreizkörpers erstreckenden Vorsprung auf. Dieser Vorsprung kann dabei mit einer Nut in den einzelnen Haltelementen zusammenwirken, um so den Spreizkörper in der Längsrichtung der Halteeinrichtung gegenüber den Halteelementen zu fixieren. Umgekehrt könnte auch an den Halteelementen ein Vorsprung angeordnet sein, der in eine entsprechende Nut des Fixierkörpers eingreift.

Vorteilhaft weist dabei wenigstens der Vorsprung und/oder die Nut eine Schrägfläche auf, d.h. insbesondere eine Schrägfläche gegenüber einer horizontalen Ebene, wenn die Längsrichtung der Halteeinrichtung vertikal verläuft. Diese Schrägfläche kann dazu dienen, dass bei einem Herausdrücken des Spreizkörpers aus den Halteelementen bzw. dem Basiskörper die Halteelemente auseinandergedrängt werden und so den Spreizkörper freigeben. Durch die Ausgestaltung dieser Schrägfläche, insbesondere deren Neigung kann auch die Kraft beeinflusst werden, die nötig ist, um den Spreizkörper aus dem Basiskörper herauszudrücken. Bevorzugt weisen sowohl der Vorsprung als auch die Nut eine entsprechende Schrägfläche auf.

Vorteilhaft weist daher wenigstens ein Halteelement eine Ausnehmung auf, in welche der Vorsprung eingreift. Dabei ist vorteilhaft ein Querschnitt dieser Ausnehmung derart gebildet, dass er zur Aufnahme des Vorsprungs und bevorzugt auch zu einer formschlüssigen Aufnahme des Vorsprungs geeignet ist.

Auf diese Weise kann der Spreizkörper gegenüber dem Haltelement auch ohne Verwendung von Schraubverbindungen arretiert werden.

Bei einer weiteren vorteilhaften Ausführungsform bildet der Halteabschnitt einen Anschlag aus, der geeignet ist, an einem Mündungsrand der Kunststoffbehältnisse anzuliegen. Bevorzugt weist daher dieser Anschlag einen größeren Querschnitt auf als die Mündung der Behältnisse. Auf diese Weise kann erreicht werden, dass der Halteabschnitt genau bis zu einem bestimmten Maß in die Mündung der Kunststoffvorformlinge eingeführt wird. Dabei können die Halteelemente selbst jeweils ein Segment dieses Anschlags ausbilden.

Vorteilhaft kann an jedem der Halteelemente ein derartiger Anschlag ausgebildet sein. In seiner Gesamtheit kann sich auf diese Weise ein insgesamt (und abgesehen von den Spalten) ringförmiger Anschlag ergeben.

Bei einer weiteren vorteilhaften Ausführungsform ragt der Spreizkörper in einer Längsrichtung der Halteeinrichtung in einem montierten Zustand über die Halteelemente hinaus. So kann beispielsweise der Spreizkörper einen Anschlag aufweisen, der verhindert, dass der Spreizkörper zu weit in die Halteelemente eingeschoben wird.

Die vorliegende Erfindung bezieht sich weiterhin auf eine Vorrichtung zum Erwärmen von Kunststoffvorformlingen mit einer Transporteinrichtung, welche die Kunststoffvorformlinge entlang eines vorgegebenen Transportpfads transportiert und einer Erwärmungseinrichtung, welche die Kunststoffvorformlinge wenigstens zeitweise während ihres Transports erwärmt. Erfindungsgemäß ist an der Transporteinrichtung wenigstens eine Halteeinrichtung zum Halten der Kunststoffvorformlinge der oben beschriebenen Art angeordnet. Bevorzugt ist an der Transporteinrichtung eine Vielzahl von derartigen Halteeinrichtungen angeordnet.

Bei einer weiteren vorteilhaften Ausführungsform weist die Transporteinrichtung ein Transportrad auf, an dem die Halteeinrichtungen angeordnet sind. Vorteilhaft handelt es sich bei wenigstens einer Erwärmungseinrichtung um eine Erwärmungseinrichtung, welche die Kunststoffvorformlinge zu deren Erwärmung mit Mikrowellen beaufschlagt. Bei dieser Ausführungsform weist die Erwärmungseinrichtung bevorzugt wenigstens einen Mikrowellenresonator auf, in den die Kunststoffvorformlinge einführbar sind. Bevorzugt werden hierbei zumindest auch Abschnitte der Halteeinrichtung in diesen Resonator eingeführt. Dabei kann die Erwärmungseinrichtung weiterhin auch eine Mikrowellenerzeugungseinrichtung wie etwa ein Magnetron aufweisen.

Bei einer weiteren bevorzugten Ausführungsform kann die Vorrichtung auch eine Linearbewegungseinheit aufweisen, welche die Kunststoffvorformlinge - insbesondere durch eine Bewegung in deren Längsrichtung in Mikrowellenresonatoren einführt.

Bei einer weiteren bevorzugten Ausführungsform ist wenigstens eine Erwärmungseinrichtung beweglich mit den Kunststoffvorformlingen, d.h. bevorzugt werden hier die Kunststoffvorformlinge gemeinsam mit den Erwärmungseinrichtungen transportiert.

Weiterhin wäre es jedoch auch möglich, dass es sich bei der Erwärmungseinrichtung um eine Infraroterwärmungseinrichtung handelt. Dabei ist bevorzugt diese Infraroterwärmungseinrichtung stationär gegenüber dem Transportpfad der Kunststoffvorformlinge angeordnet. Bevorzugt werden bei dieser Ausgestaltung die Kunststoffvorformlinge mit ihren Halteeinrichtungen an den Erwärmungseinrichtungen vorbeigeführt. Bevorzugt sind die Halteeinrichtungen bei dieser Ausgestaltung bevorzugt an einer Transportkette angeordnet.

Weitere Vorteile und Ausführungsformen ergeben sich aus den beigefügten Zeichnungen:

Darin zeigen:
- Fig. 1: eine perspektivische Darstellung einer erfindungsgemäßen Halteeinrichtung;
- Fig. 2: die Halteeinrichtung aus Figur 1 mit daran angeordneten Kunststoffvorformling;
- Fig.3: eine Schnittdarstellung der in Figur 1 gezeigten Halteeinrichtung mit Kunststoffvorformling;
- Fig. 4: eine weitere Schnittdarstellung der in Figur 1 gezeigten Halteeinrichtung mit Kunststoffvorformling;
- Fig. 5: eine grob schematische Darstellung einer Erwärmungsvorrichtung zum Erwärmen von Kunststoffvorformlingen.

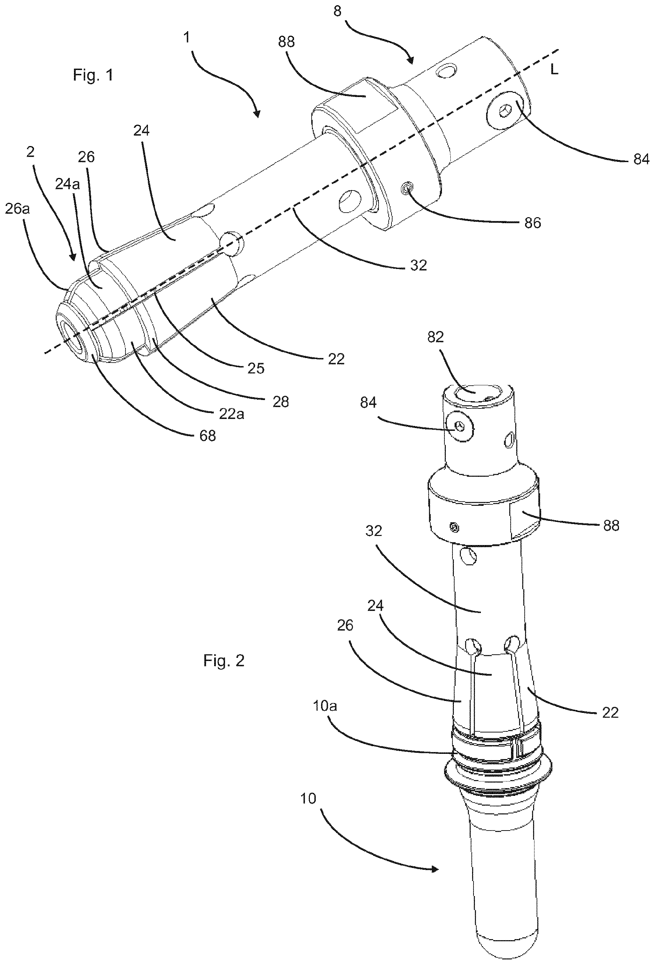

Figur 1 zeigt eine perspektivische Darstellung einer erfindungsgemäßen Halteeinrichtung 1. Diese Halteeinrichtung 1 weist dabei einen Halteabschnitt 2 auf, der zumindest teilweise in ein Behältnis bzw. in die Mündung eines Behältnisses einführbar ist.

Zu diesem Zwecke weist der Halteabschnitt fünf Haltelemente 22, 24, 26 (die übrigen nicht dargestellt, da hinterseitig) auf, die jeweils einen radial nach innen versetzten Endabschnitt 22a, 24a, 26a aufweisen, der in die Mündungen der Kunststoffvorformlinge einführbar ist. Zwischen den einzelnen Haltelementen sind dabei jeweils Schlitze 25 angeordnet, durch die eine gewisse Relativbewegung der Halteelemente bezüglich einander möglich wird. Auf diese Weise können die Halteelemente 22, 24 beim Eintritt in den Kunststoffvorformling geringfügig näher aufeinander zugestellt werden. Diese Schlitze verlaufen dabei bevorzugt geradlinig und sind besonders bevorzugt parallel zu der Längsrichtung L der Halteeinrichtung. Die eingangs erwähnte Umfangsrichtung der Halteeinrichtung ist damit als Umfangsrichtung um die Längsrichtung definiert.

Das Bezugszeichen 68 kennzeichnet einen Anschlag des in Figur 1 nicht gezeigten Spreizkörpers, der zwischen den einzelnen Halteelementen bzw. innerhalb derselben verläuft. Das Bezugszeichen 32 kennzeichnet einen Basiskörper des Halteabschnittes, an dem die Halteelemente 22, 24, 26 angeordnet sind und mit dem die Halteelemente 22, 24, 26 einteilig ausgebildet sind.

Bevorzugt sind diese Halteelemente zumindest geringfügig biegbar an dem Basiskörper 32 angeordnet. Durch diese biegbare Anordnung werden die Halteelemente bei Eintauchen in ein Kunststoffbehältnis leicht nach innen gedrückt und bringen nunmehr eine gewisse Gegenkraft gegen die Innenwandung der Mündung auf, welche die Kunststoffbehältnisse 10 an der Halteeinrichtung 1 hält.

Das Bezugszeichen 8 kennzeichnet einen Grundkörper bzw. Träger der Halteeinrichtung 1, an dem wiederum der Halteabschnitt 2, genauer gesagt der Basiskörper 32 angeordnet ist. Der Basiskörper 32 bildet im Inneren einen Hohlraum aus, in dem wiederum der Spreizkörper angeordnet ist. Über Schraubverbindungen 86 ist der Basiskörper 2 in dem Grundkörper 8 angeordnet. Das Bezugszeichen 85 bezieht sich dabei auf einen Aufnahmebereich, in den der Halteabschnitt, genauer der Basiskörper 32 eingeführt wird.

Das Bezugszeichen 88 kennzeichnet eine Anlagefläche, um die Halteeinrichtung 1 an einem Träger zu montieren. Bevorzugt wird zumindest der Abschnitt 32 und die Halteelemente 24, 26 und 22 aus einem nicht-metallischen Material gefertigt. Vorteilhaft ist auch der im Inneren (nicht sichtbar) befindliche Spreizkörper aus einem nicht-metallischen Material gefertigt.

Figur 2 zeigt eine Darstellung der Halteeinrichtung 1 mit einem daran angeordneten Kunststoffvorformling 10. Dieser Kunststoffvorformling 10 weist eine Mündung auf, in welche der Endabschnitt 2 der Halteeinrichtung eintaucht, um diesen Kunststoffvorformling zu halten.

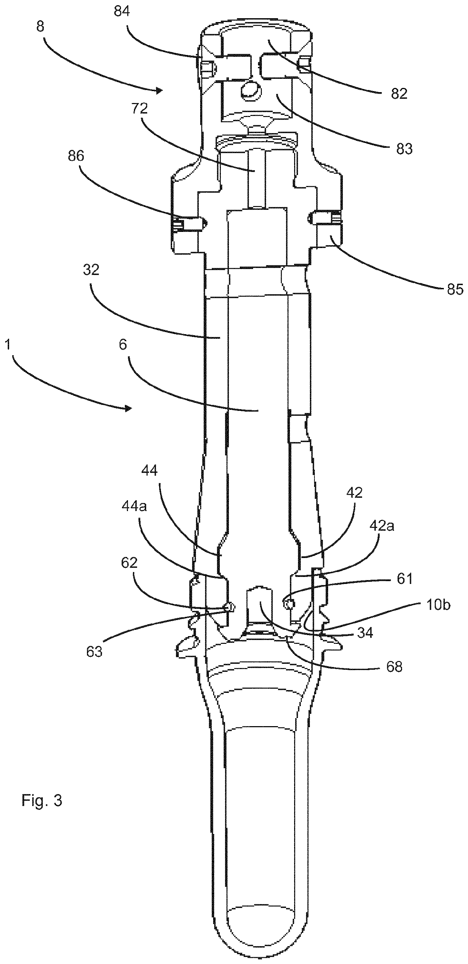

Figur 3 zeigt eine Schnittdarstellung der erfindungsgemäßen Halteeinrichtung 1. Dabei sind wiederum zwei Halteelemente 22 und 26 erkennbar. Man erkennt, dass innerhalb der Halteelemente der Spreizkörper 6 angeordnet ist, wobei sich das Bezugszeichen 62 auf das Spreizelement bezieht, welches definiert, wie weit bei eingesetzten Spreizkörpern die beiden Halteelemente 26 und 22, insgesamt jedoch sämtliche Halteelemente auseinandergedrückt und gegen die Innenwandung 10b des Kunststoffvorformlings gedrückt werden. Das Bezugszeichen 63 kennzeichnet eine Aufnahmenut des Halteelements 22, an der das Spreizelement 62 anliegt.

In diesem Zusammenhang wird darauf hingewiesen, dass der Spreizkörper die Halteelemente 22, 24, 26 im Betriebszustand nicht weit aufspreizen muss. Entsprechend könnte der Spreizkörper auch als Stützkörper bezeichnet werden, der die Halteelemente radial nach innen abstützt. Allerdings werden die Halteelemente bei der Entnahme des Spreizkörpers aus dem Basiskörper ebenfalls zumindest leicht aufgespreizt.

Das Bezugszeichen 68 kennzeichnet wieder den unteren Anschlag, der an den Haltelementen 22, 24, 26 anliegt.

Das Bezugszeichen 86 bezieht sich wieder auf Schraubeinrichtungen, wie hier Madenschrauben, mit denen der Träger 8 an dem Basiskörper 32 und damit auch dem Halteabschnitt 2 befestigt ist. Das Bezugszeichen 72 kennzeichnet eine kanalförmige Öffnung, durch welche ein Werkzeug wie beispielsweise ein kleiner Schraubenzieher eingeführt werden kann um einen Spreizkörper 6 in der Längsrichtung L nach unten aus dem Körper 32 herauszudrücken. Auf diese Weise wird das Spreizelement 62 zugänglich und kann eingewechselt werden.

Mit den Schraubkörpern 84 kann die gesamte Einrichtung an einem weiteren Element befestigt werden, wie beispielsweise einen stangenartigen Körper, der in die Ausnehmung 83 eintritt.

So kann beispielsweise die Halteeinrichtung an einem Antrieb befestigt werden, der auch bewirkt, dass der Kunststoffvorformling 10 um seine eigene Längsachse gedreht wird. Die Halteeinrichtung kann jedoch auch an einer Transporteinrichtung wie etwa einer Transportkette angeordnet sein und durch diese transportiert werden.

Das Bezugszeichen 44 bezieht sich auf einen hier umlaufenden Vorsprung, der an dem Spreizkörper 6 ausgebildet ist. Dieser Vorsprung greift in einem montierten Zustand in Nuten bzw. Ausnehmungen 42 ein, die in den einzelnen Halteelementen ausgebildet sind. Man erkennt dabei, dass die geometrischen Gestalten dieser Vorsprünge und Ausnehmungen aneinander angepasst sind. Nach unten hin,. d.h. in Richtung des Vorsprungs weisen sowohl die Nut als auch der Vorsprung jeweils Schrägflächen 42a, 44a auf. Durch diese Schrägflächen wird, wenn der Spreizkörper aus dem Basiskörper 32 bzw. den Halteelementen herausgedrückt werden soll, auf die Halteelemente eine Kraft ausgeübt, welche diese auseinanderspreizt.

Man erkennt weiterhin, dass sich das Spreizelement 62 relativ nahe an dem unteren Ende der Halteeinrichtung befindet, so dass es bei angeordnetem Kunststoffvorformling ebenfalls innerhalb dieses Kunststoffvorformlings angeordnet ist. Bevorzugt ist dieses Spreizelement in der Längsrichtung unterhalb des Vorsprungs 44 angeordnet und bevorzugt zwischen dem Vorsprung und dem Anschlagelement 68. Dies ist vorteilhaft, da in diesem Falle die durch das Spreizelement auf die Halteelemente aufzubringende Kraft geringer ist, als bei höherer Anordnung des Spreizelements 62.

Auch wird auf diese Weise ein Wechsel des Spreizelements 62 erleichtert, da der Spreizkörper 6 nicht so weit aus dem von den Halteelementen umgebenen Bereich herausgeschoben werden muss. Das Bezugszeichen 82 kennzeichnet eine in dem Grundkörper angeordnete Öffnung, durch welche ein Werkzeug zum Herausdrücken des Spreizkörpers 6 aus dem Basiskörper 32 eingeführt werden kann. Das Bezugszeichen 61 kennzeichnet eine an dem Spreizkörper angeordnete umlaufende Nut, in welche das Spreizelement 62 eingelegt werden kann. Auch das Spreizelement könnte entsprechend seiner Funktion als Stützelement bezeichnet werden, welches zum Abstützen der Halteelemente gegenüber dem Spreizkörper dient, insbesondere wenn die Halteeinrichtung in einen Kunststoffvorformling eingeschoben wird.

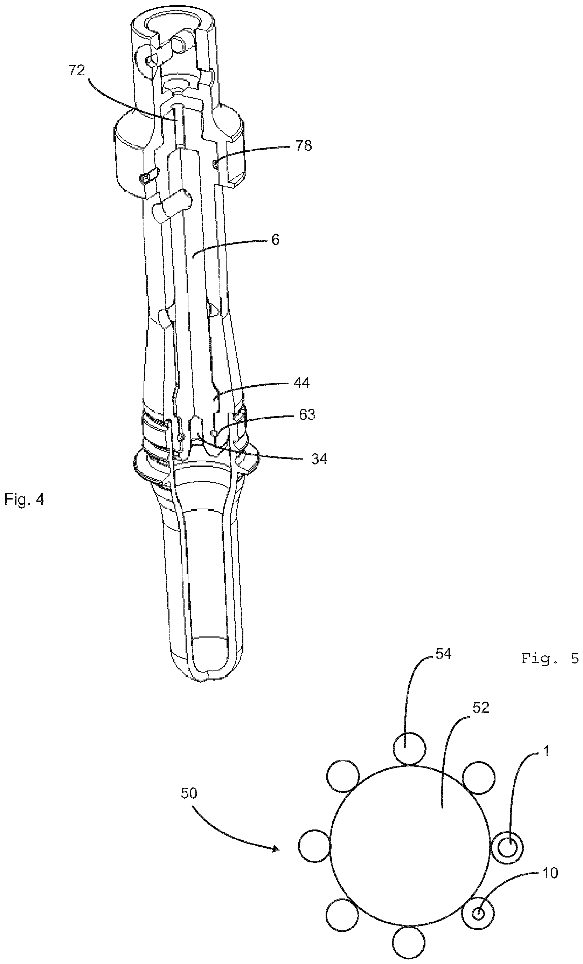

Figur 4 zeigt eine weitere Darstellung der erfindungsgemäßen Halteeinrichtung. Auch hier ist wieder der Kanal 72 erkennbar, der zum Lösen des Spreizkörpers von den Trägern bzw. dem Basiskörper 32 dient. Im Betrieb kann die gesamte Halteeinrichtung auf den Kunststoffvorformling zugestellt werden und in dessen Mündung 10a eintauchen. Sobald dies erfolgt ist, ist auch ein stabiler Halt des Kunststoffvorformlings an der Halteeinrichtung gegeben. Allerdings wird ein weiteres Eintauchen - wie oben erwähnt - durch den Anschlag 68 verhindert.

Die Bezugszeichen 21a beziehen sich auf die Anlagenflächen, mit denen die Halteelemente an der Innenwandung 10b des Kunststoffvorformlings anliegen. Das Bezugszeichen 78 kennzeichnet eine in dem Spreizkörper angeordnete Nut, in welche der Schraubkörper 86 eingreifen kann, um den Spreizkörper zu fixieren. Das Bezugszeichen 34 kennzeichnet einen in dem Spreizkörper angeordneten Hohlraum.

Fig. 5 zeigt eine grob schematische Darstellung einer Erwärmungsvorrichtung 50 zum Erwärmen von Kunststoffvorformlingen 10. Diese Erwärmungsvorrichtung weist einen drehbaren Träger 52 auf, an dem eine Vielzahl von Erwärmungseinrichtungen 54 angeordnet ist. Diese Erwärmungseinrichtungen sind hier Mikrowelleneinheiten, welche jeweils einen Resonator aufweisen, in den die Kunststoffvorformlinge 10 zu deren Erwärmung eingeführt werden. Damit werden hier die Erwärmungseinrichtungen 54 gemeinsam mit den Kunststoffvorformlingen transportiert.

Die Anmelderin behält sich vor, sämtliche in den Anmeldungsunterlagen offenbarten Merkmale werden als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Halteeinrichtung
- 2: Halteabschnitt
- 6: Spreizkörper
- 8: Grundkörper
- 10: Behältnis, Kunststoffvorformling
- 10a: Mündung des Kunststoffvorformlings
- 10b: Innenwandung des Kunststoffvorformlings
- 22, 24, 26: Halteelemente
- 22a, 24a, 26a: den Halteabschnitt 2 bildende Bereiche der Halteelemente 22, 24, 26
- 25: Schlitz
- 28: Anschlag
- 32: Basiskörper
- 34: Hohlraum
- 42: Nut
- 42a: Schrägfläche der Nut
- 44: Vorsprung
- 44a: Schrägfläche des Vorsprung
- 50: Erwärmungsvorrichtung
- 52: Transporteinrichtung
- 54: Erwärmungseinrichtung
- 61: Nut
- 62: Spreizelement bzw. Stützelement
- 63: Aufnahmenut
- 64: Anschlagelement
- 68: Anschlag
- 72: Kanal für Werkzeug
- 78: Nut
- 82: Öffnung
- 83: Hohlraum
- 84: Schraubkörper
- 85: Aufnahmebereich
- 86: Schraubkörper
- 88: Anlagefläche
- L: Längsrichtung

## Patentansprüche

1. Halteeinrichtung (1) zum Halten von Kunststoffbehältnissen (10) und insbesondere von Kunststoffvorformlingen mit einem Halteabschnitt (2), der in eine Mündung (10a) der Kunststoffbehältnisse (10) einführbar ist, wobei der Halteabschnitt (2) wenigstens ein erstes Halteelement (22) und ein zweites Halteelement (24) aufweist, welche bezüglich einander beweglich sind und welche jeweils einen Abschnitt (22a) aufweisen, der an eine Innenwandung der Mündung (10a) anlegbar sind,
wobei
zwischen den Halteelementen (22), (24) ein Spreizkörper (6) angeordnet ist, der die beiden Halteelemente (22, 24) wenigstens zeitweise abstützt, wobei an diesem Spreizkörper (6) ein wechselbares Spreizelement (62) angeordnet ist, wobei sich dieses Spreizelement (62) wenigstens abschnittsweise zwischen dem Spreizkörper (6) und den Halteelementen (22, 24) befindet **dadurch gekennzeichnet, dass**
der Spreizköper (6) in einer Längsrichtung (L) der Halteeinrichtung (1) gegenüber dem Halteabschnitt (2) verschiebbar ist.

2. Halteeinrichtung (1) nach Anspruch 1 **dadurch gekennzeichnet, dass** das wechselbare Spreizelement (62) als ringförmiger Körper ausgebildet ist.

3. Halteeinrichtung (1) nach wenigstens einem der vorangegangenen Ansprüche,
**dadurch gekennzeichnet, dass**
wenigstens die Halteelemente (22, 24) oder der Spreizkörper (6) aus einem nicht metallischen Material gefertigt ist.

4. Halteeinrichtung (1) nach wenigstens einem der vorangegangenen Ansprüche,
**dadurch gekennzeichnet, dass**
ein Material der Halteelemente und/oder des Spreizkörpers aus einer Gruppe von Materialien ausgewählt ist, welche Kunststoffe, Keramik und Porzellan enthält.

5. Halteeinrichtung (1) nach wenigstens einem der vorangegangenen Ansprüche,
**dadurch gekennzeichnet, dass**
ein Material der Halteelemente und/oder des Spreizkörpers aus einer Gruppe von Kunststoffen ausgewählt ist, welche PEI (Polyethermid), PTFE (Polytetrafluorethylen), PP (Polypropylen) und dergleichen enthält.

6. Halteeinrichtung (1) nach wenigstens einem der vorangegangenen Ansprüche,
**dadurch gekennzeichnet, dass**
wenigstens ein Halteelement (22, 24) eine Nut (63) zur Aufnahme wenigstens eines Abschnitts des Spreizelements aufweist.

7. Halteeinrichtung (1) nach wenigstens einem der vorangegangenen Ansprüche,
**dadurch gekennzeichnet, dass**
der Spreizkörper (6) eine Nut (61) aufweist, in welche das Spreizelement (62) einlegbar ist.

8. Halteeinrichtung (1) nach wenigstens einem der vorangegangenen Ansprüche,
**dadurch gekennzeichnet, dass**
der Spreizkörper (6) ein Anschlagelement (64) aufweist, welches in einem montierten Zustand an einem Endabschnitt wenigstens eines Halteelements (22, 24, 26) anliegt.

9. Halteeinrichtung (1) nach wenigstens einem der vorangegangenen Ansprüche,
**dadurch gekennzeichnet, dass**
die Halteeinrichtung (1) einen Grundkörper (8) aufweist, an dem die Halteelemente (22, 24, 26) angeordnet sind.

10. Halteinrichtung (1) nach Anspruch 10,
**dadurch gekennzeichnet, dass**
der Grundkörper eine Öffnung (82) aufweist, durch welche in der Längsrichtung (L) der Halteeinrichtung (1) ein Werkzeug in das Innere des Grundkörpers (8) einführbar ist.

11. Halteeinrichtung (1) nach wenigstens einem der vorangegangenen Ansprüche,
**dadurch gekennzeichnet, dass**
der Spreizkörper (6) einen sich wenigstens teilweise in der Umfangsrichtung des Spreizkörpers erstreckenden Vorsprung (44) aufweist.

12. Halteeinrichtung (1) nach Anspruch 11,
**dadurch gekennzeichnet, dass**
wenigstens ein Halteelement (22, 24) eine Ausnehmung (42) aufweist, in welche der Vorsprung (44) eingreift.

13. Halteeinrichtung (1) nach wenigstens einem der vorangegangenen Ansprüche,
**dadurch gekennzeichnet, dass**
der Halteabschnitt (2) einen Anschlag (28) ausbildet, der geeignet ist, an einem Mündungsrand der Kunststoffbehältnisse (10) anzuliegen.

14. Vorrichtung (50) zum Erwärmen von Kunststoffvorformlingen (10) mit einer Transporteinrichtung (52), welche die Kunststoffvorformlinge (10) entlang eines vorgegebenen Transportpfads transportiert und einer Erwärmungseinrichtung (54), welche die Kunststoffvorformlinge (10) wenigstens zeitweise während ihres Transports erwärmt, wobei an der Transporteinrichtung (52) wenigstens eine Halteeinrichtung (1) zum Halten der Kunststoffvorformlinge (10) nach wenigstens einem der vorangegangenen Ansprüche angeordnet ist.

## Claims

1. Holding device (1) for holding plastic containers (10) and in particular plastic parisons with a holding section (2) which can be introduced into a mouth (10a) of the plastic containers (10), wherein the holding section (2) has at least one first holding element (22) and one second holding element (24) which are movable relative to one another and which in each case have a section (22a) which can be applied to an inner wall of the mouth (10a),
wherein
an expansion body (6) which supports the two holding elements (22), (24) at least intermittently is disposed between the holding elements (22), (24), wherein a replaceable expansion element (62) is disposed on this expansion body (6), wherein this expansion element (62) is located at least in some sections between the expansion body (6) and the holding elements (22), (24),
**characterized in that**
the expansion body (6) is movable in a longitudinal direction (L) of the holding device (1) relative to the holding section (2).

2. Holding device (1) according to claim 1,
**characterized in that**
the replaceable expansion element (62) is designed as an annular body.

3. Holding device (1) according to at least one of the preceding claims,
**characterized in that**
at least the holding elements (22), (24) or the expansion body (6) is made of a non-metallic material.

4. Holding device (1) according to at least one of the preceding claims,
**characterized in that**
a material of the holding elements and/or of the expansion body is selected from a group of materials which includes plastics, ceramic and porcelain.

5. Holding device (1) according to at least one of the preceding claims,
**characterized in that**
a material of the holding elements and/or of the expansion body is selected from a group of materials which includes PEI (polyetherimide), PTFE (polytetrafluorethylene), PP (polypropylene) and the like.

6. Holding device (1) according to at least one of the preceding claims,
**characterized in that**
at least one holding element (22,24) has a groove (63) to receive at least one section of the expansion element.

7. Holding device (1) according to at least one of the preceding claims,
**characterized in that**
the expansion body (6) has a groove (61) into which the expansion element (62) can be laid.

8. Holding device (1) according to at least one of the preceding claims,
**characterized in that**
the expansion body (6) has a stop element (64) which in an assembled state bears against an end section of at least one holding element (22, 24, 26).

9. Holding device (1) according to at least one of the preceding claims,
**characterized in that**
the holding device (1) has a main body (8) on which the holding elements (22, 24, 26) are disposed.

10. Holding device (1) according to claim 9,
**characterized in that**
the main body has an opening (82) through which a tool can be introduced into the interior of the main body (8) in the longitudinal direction (L) of the holding device (1).

11. Holding device (1) according to at least one of the preceding claims,
**characterized in that**
the expansion body (6) has a projection (44) extending at least partially in the circumferential direction of the expansion body.

12. Holding device (1) according to claim 11,
**characterized in that**
at least one holding element (22, 24) has a recess (42) in which the projection (44) engages.

13. Holding device (1) according to at least one of the preceding claim,
**characterized in that**
the holding section (2) forms a stop (28) which is suitable for bearing against a rim of the mouth of the plastic containers (10).

14. Device (50) for heating plastic parisons (10) with a transport device (52) which transports the plastic parisons (10) along a predetermined transport path and a heating device (54) which heats the plastic parisons (10) at least intermittently during transport thereof,
wherein
at least one holding device (1) for holding the plastic parisons (10) according to at least one of the preceding claims is disposed on the transport device (52).

## Revendications

1. Dispositif de maintien (1) pour le maintien de récipients en matière plastique (10) et en particulier d'ébauches en matière plastique avec une section de maintien (2) qui peut être introduite dans une embouchure (10a) des récipients plastiques (10), dans lequel la section de maintien (2) présente au moins un premier élément de maintien (22) et un second élément de maintien (24) qui sont mobiles l'un par rapport à l'autre et qui présentent respectivement une section (22a) qui peut être posée contre une paroi intérieure de l'embouchure (10a),
dans lequel
un corps d'écartement (6) est agencé entre les éléments de maintien (22), (24) lequel soutient au moins temporairement les deux éléments de maintien (22, 24), dans lequel sur ce corps d'écartement (6) un élément d'écartement interchangeable (62) est agencé, dans lequel cet élément d'écartement (62) se trouve au moins par sections entre le corps d'écartement (6) et les éléments de maintien (22, 24),
**caractérisé en ce que**
le corps d'écartement (6) est mobile dans un sens longitudinal (L) du dispositif de maintien (1) par rapport à la section de maintien (2).

2. Dispositif de maintien (1) selon la revendication 1,
**caractérisé en ce que**
l'élément d'écartement interchangeable (62) est réalisé sous forme de corps annulaire.

3. Dispositif de maintien (1) selon au moins l'une quelconque des revendications précédentes,
**caractérisé en ce que**
au moins les éléments de maintien (22, 24) ou le corps d'écartement (6) est fabriqué en un matériau non métallique.

4. Dispositif de maintien (1) selon au moins l'une quelconque des revendications précédentes,
**caractérisé en ce que**
un matériau des éléments de maintien et/ou du corps d'écartement est sélectionné dans un groupe de matériaux qui contient des matières plastiques, de la céramique et de la porcelaine.

5. Dispositif de maintien (1) selon au moins l'une quelconque des revendications précédentes,
**caractérisé en ce que**
un matériau des éléments de maintien et/ou du corps d'écartement est sélectionné dans un groupe de matières plastiques qui contient du PEI (polyétherimide), PTFE (polytétrafluoroéthylène), PP (polypropylène) et similaires.

6. Dispositif de maintien (1) selon au moins l'une quelconque des revendications précédentes,
**caractérisé en ce que**
au moins un élément de maintien (22, 24) présente une rainure (63) pour la réception d'au moins une section de l'élément d'écartement.

7. Dispositif de maintien (1) selon au moins l'une quelconque des revendications précédentes,
**caractérisé en ce que**
le corps d'écartement (6) présente une rainure (61) dans laquelle l'élément d'écartement (62) peut être introduit.

8. Dispositif de maintien (1) selon au moins l'une quelconque des revendications précédentes,
**caractérisé en ce que**
le corps d'écartement (6) présente un élément de butée (64) qui repose dans un état monté contre une section d'extrémité d'au moins un élément de maintien (22, 24, 26).

9. Dispositif de maintien (1) selon au moins l'une quelconque des revendications précédentes,
**caractérisé en ce que**
le dispositif de maintien (1) présente un corps de base (8) contre lequel les éléments de maintien (22, 24, 26) sont agencés.

10. Dispositif de maintien (1) selon la revendication 10,
**caractérisé en ce que**
le corps de base présente une ouverture (82) au travers de laquelle dans le sens longitudinal (L) du dispositif de maintien (1) un outil peut être introduit à l'intérieur du corps de base (8).

11. Dispositif de maintien (1) selon au moins l'une quelconque des revendications précédentes,
**caractérisé en ce que**
le corps d'écartement (6) présente une saillie (44) s'étendant au moins partiellement dans le sens périphérique du corps d'écartement.

12. Dispositif de maintien (1) selon la revendication 11,
**caractérisé en ce que**
au moins un élément de maintien (22, 24) présente un évidement (42), dans lequel la saillie (44) vient en prise.

13. Dispositif de maintien (1) selon au moins l'une quelconque des revendications précédentes,
**caractérisé en ce que**
la section de maintien (2) réalise une butée (28) qui est appropriée afin de reposer contre un bord d'embouchure des récipients en matière plastique (10).

14. Dispositif (50) pour le chauffage d'ébauches en matière plastique (10) avec un dispositif de transport (52) qui transporte les ébauches en matière plastique (10) le long d'une voie de transport prescrite et un dispositif de chauffage (54) qui chauffe les ébauches en matière plastique (10) au moins temporairement pendant leur transport,
dans lequel
sur le dispositif de transport (52) au moins un dispositif de maintien (1) est agencé pour le maintien des ébauches en matière plastique (10) selon au moins l'une quelconque des revendications précédentes.
